Europäisches Patentamt

European Patent Office

Office européen des brevets

(19)

(11) Publication number: 0 250 113 A2

# EUROPEAN PATENT APPLICATION

(21) Application number: 87304768.2

(22) Date of filing: 29.05.87

(51) Int. Cl.⁴: **B60C 11/24**

(30) Priority: 18.06.86 US 875848

(43) Date of publication of application:
23.12.87 Bulletin 87/52

(84) Designated Contracting States:
BE DE ES FR GB IT LU NL

(71) Applicant: GENERAL TIRE INC.
One General Street
Akron Ohio 44329(US)

(72) Inventor: Price, Thomas J.
399 Belle Avenue Stark County
Hartville Ohio 44632(US)

(74) Representative: Paget, Hugh Charles Edward
et al
MEWBURN ELLIS & CO. 2/3 Cursitor Street
London EC4A 1BQ(GB)

(54) Tire with tread wear indicating grooves.

(57) In order to detect early uneven wear patterns on new tires resulting from vehicle misalignment, the treads of the tires are provided with groups (8,10) of grooves of varying depths, so that the grooves will wear away at varying rates. Preferably a group (8,10) of at least five grooves is provided on the outermost ribs of the tire adjacent each shoulder (6) and at the same circumferential position. Also, the grooves (8,10) are preferably made of different lengths corresponding to their depths for easy identification. By observing how fast the grooves of one group on one shoulder rib wear away relative to the grooves on the other shoulder rib, uneven wear of the shoulder ribs can be detected at an early time in the tire's life.

FIG. 1

Xerox Copy Centre

## TIRE WITH TREAD WEAR INDICATING GROOVES

### Field Of The Invention

This invention relates to a tire provided with means on its tread for visually detecting an uneven wear pattern.

### Background Of The Invention

Uneven tread wear on the tires on the front of a vehicle is usually caused by misalignment of the front end wheels or by the rear axle or axles not being perpendicular to the vehicle frame. If such difficulties exist when new tires are put on the vehicle and they remain uncorrected for very long, the uneven wear caused on the tires can seriously shorten the useful life of the tires. On tires with conventional tread design features, it is difficult to determine within the first several thousand miles of use whether the tread is wearing unevenly. By the time the uneven wear becomes apparent, the tire has usually been worn to a point where the uneven wear pattern has already reduced its useful life.

One of the ways of telling whether some tire treads are wearing unevenly is when sipes or grooves that are less than "full depth" begin to wear away. However, because the main functions of grooves and sipes are for traction and for carrying away water in wet weather, even relatively shallow grooves and sipes are made of a depth that is substantial compared to the total depth of the tread. Consequently, by the time even the shallowest of the sipes of an ordinary tread wear away, the tire has had a substantial amount of wear, and any uneven wear has created a "wear pattern" in the tire. Thus, the useful life of the tire is already substantially shortened, and furthermore, because of the "worn-in" pattern created, the tire will probably continue to wear unevenly after the vehicle problem has been corrected.

An example of a tire with grooves that are too deep to be used to detect early uneven wear patterns is shown in U.S. Patent 2,240,542 to P.M.Bourdon. In Figure II a series of narrow grooves of slightly varying depths provided for traction purposes. The deepest groove is about the same depth as the main grooves of the tread, and even the shallowest of the grooves extends almost to that depth. By the time any of these grooves begin to disappear, the tire will be almost fully worn and in need of replacement.

Examples of other traction grooves in tires are shown in U.S. Patents 3,023,798; 2,808,867; and 3,402,751. Also grooves or sipes used for wear resistance, control stability, or other purposes such as shown in U.S. Patents 2,339,540; 2,701,598; 3,550,665; 3,570,571; and 4,282,914; and Japanese Patent 59-96002. In all these patents the grooves or sipes are too deep for early detection of uneven tread wear. Also, they are designed for other purposes and are all of the same depth; so the grooves in any one area of the tread would all wear away at approximately the same time and it would be difficult to tell before that time how fast the tire was wearing in each tread area.

U.S. Patent 2,821,231 to Kraft, assigned to the assignee of the present invention, shows a tire with transverse slits provided for traction and wear resistance. Each slit is extremely long, traversing several ribs of the tire, and extends between 1/3 the width of the tread to all the way across the tread. The slits have concave shaped bottoms which at their deepest points in the center are between 75 and 125 percent of the depth of the circumferential grooves. As the tread wears, such slots will become shorter, but it would be difficult to determine the relative wear rates of various parts of the tread without carefully measuring the length of each slot. Also, because of the great length of the slots, each of the tread portions at the ends of the slots might be wearing at different rates, and other measurements would have to be taken to determine whether the decreased length of the slot was due more to wear at the shoulder of the tread or to wear in the center of the tread.

## Summary Of The Invention

The present invention solves the problem of detecting early uneven wear in tires by providing groups of grooves, which may be small grooves, in the tread and are specially designed for revealing uneven tread wear very early in the tire's life. The grooves in each group are relatively shallow compared to standard tread groove depths and extend no deeper than one-half the thickness of the deepest circumferential grooves of the tire. There are at least two different groove depths in each group, so that the early progressive wear of the tread where grooves are located may be determined and compared to the wear rate of the tread in other locations where similar groups of grooves are located.

Optional advantages and details of the invention will be apparent from the following detailed description and attached drawings.

## Description Of The Drawings

Figure I is a perspective view of a tire illustrating one embodiment of the present invention;

Figure 2 is a perspective view of a tire illustrating a second embodiment of the present invention;

Figure 3 is an enlarged view of a portion of the tire of Figure I;

Figure 4 is a sectional view of the tire of Figure I taken along lines IV-IV of Figure 3;

Figures 5 through 8 are front-end views of a vehicle having tires embodying the subject invention.

In Figure I, a vehicle tire 2 has circumferential grooves 4 provided for traction purposes. Small groves 6 on the shoulders of the tire give the tire improved stability and shoulder wear.

The improvement that is the subject of this invention resides in groups of small laterally extending grooves 8 and I0 that are located in the tire of Figure I adjacent the shoulders. Preferably, there are four groups of grooves 8 and four groups of grooves I0 adjacent each shoulder and spaced evenly around the circumference of the tire at 90 degree intervals. The number and spacing of the groups and grooves 8 and I0 around the circumference of the tire may vary depending on the amount of circumferential variation in tread wear that is expected. However, in order to obtain an accurate indication of the relative difference in tread wear between the shoulders of the tire, each group of grooves I0 should be located laterally opposite from and at the same circumferential location as one of the groups of grooves 8. This will allow the tread wear on the shoulder ribs to be compared at the same circumferential locations.

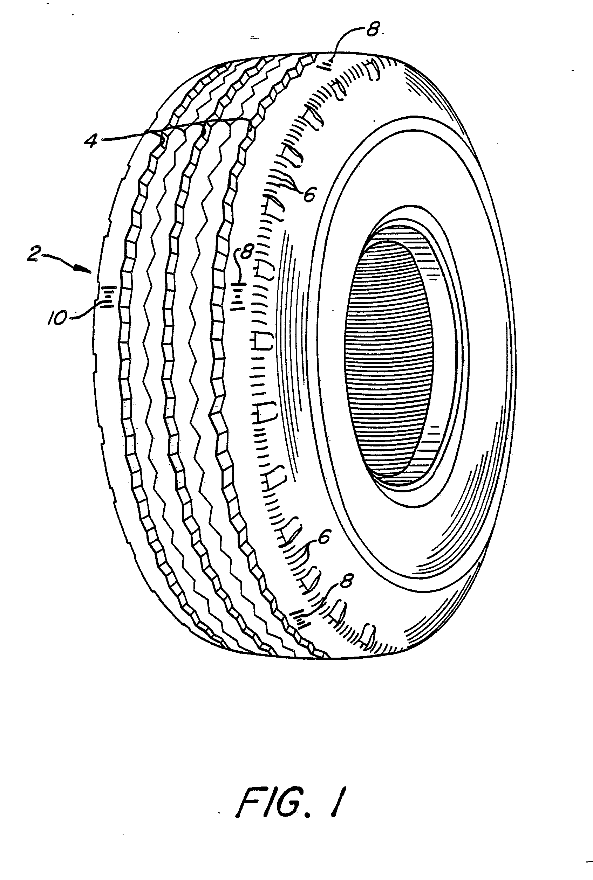

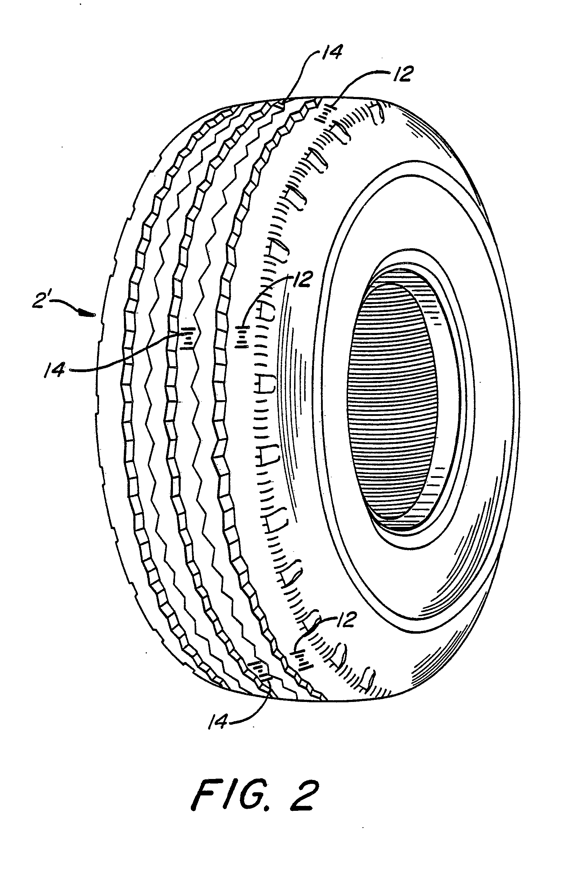

Of course, the tread-wear indicating grooves do not have to be located on the tire at the same locations as the groups of grooves 8 and I0 shown in Figure I. The grooves may be located anywhere on the tread where it is desired to measure tread wear and to compare that wear with the wear at some other location on the tire. For instance, it may be desirable to compare the wear on the shoulder rib of the tire with the wear in the center of the tread. In that event, groups of tread-wear indicating grooves would be located as shown by the groups of grooves I2 and I4 on the tire 2' in Figure 2.

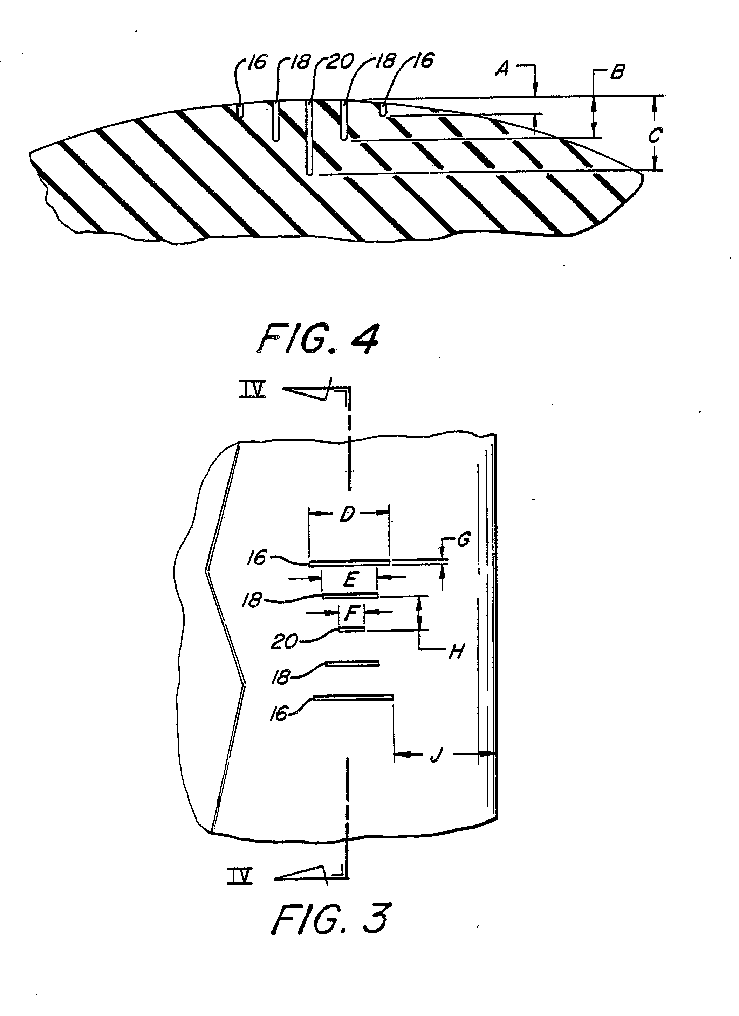

Figures 3 and 4 show a typical group of tread-wear indicating grooves 8 in detail. The group of grooves 8 includes two long and shallow grooves I6 at either end of the group, two grooves I8 of the intermediate length and depth, and a central groove 20 that is short but relatively deep.

A recommended width "G" of the grooves I6, I8, and 20 (Figure 3) is 0.03 inches (0.8 mm), and a recommended spacing "H" of these grooves is 0.2 inches (5.I mm). A typical set of recommended groove depths would be, referring to Figure 4, a depth "A" of grooves I6 of 0.03 inches (0.08 mm), a depth "B" of grooves I8 of 0.09 inches (2.3 mm) and a depth "C" of groove 20 of 0.I6 inches (4.I mm). The ratio of these groove depths is approximately I:3:5.

Preferably the ratio of the intermediate groove I8 has a depth between two and three times the depth of the shallowest groove I6 and the deepest groove 20 has a depth between one and a half and two and a half times the depth of the intermediate groove I8. These depth relationships insure that the grooves wear away at separate intervals of tread wear so that the grooves remaining provide a good indication of the relative amount of wear that has occurred in the area of the tread where the group of grooves 8 is located.

For ease of identification of the grooves I6, I8 and 20, they are preferably made of different lengths, for instance a recommended length "D" of grooves I6 is 0.5 inches (I2.3mm), a recommended length "E" of grooves I8 is 0.35 inches (8.9 mm) and a recommended length "F" of groove 20 is 0,.2 inches (5.I mm).

To prevent the groups of grooves 8 and l0 from interferring with the shoulder wear or control characteristics of the tire, the grooves should be spaced from the shoulder of the tire so that the widest groove is no closer than a distance "J" of 0.3 inches (7.6 mm) from the shoulder edge. Of course, both groups of grooves 8 and l0 should be placed the same distances from their respective shoulders, so that the areas measured for wear give a comparable indication of the degree to which the tread is wearing on each side of the tire.

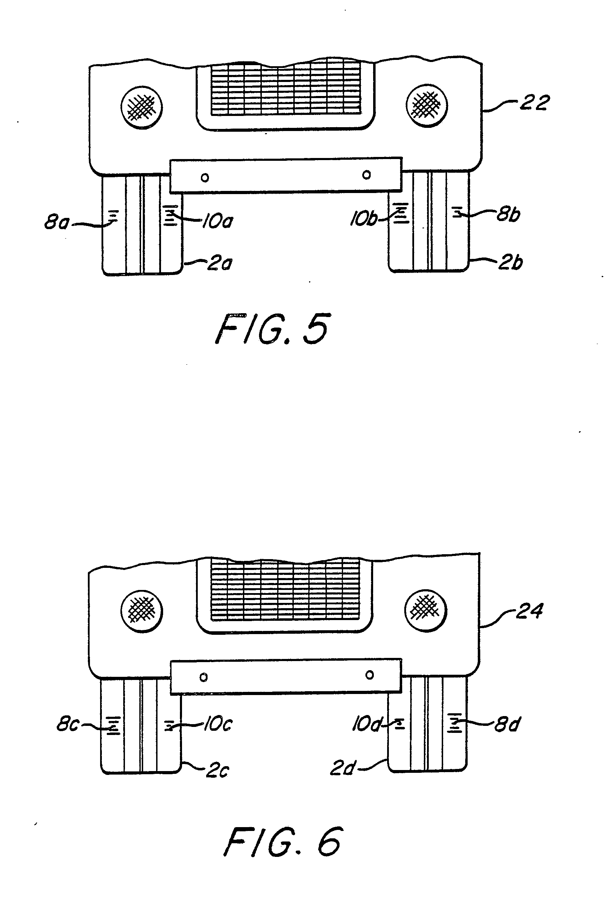

Figures 5 through 8 show how early uneven tread wear can be detected on the shoulder ribs of tires, when the tires are provided with groups of grooves such as the groups 8 and l0 of the tire of Figure I. In fact, it is often possible to identify the probable cause of such uneven tread wear, so that the problem can be corrected very early in the tire's life, for instance in the first 3,000 to l0,000 miles of wear of a highway vehicle tire.

In Figure 5, the tread area around the groups of shallow grooves 8a and 8b on the outside ribs of the tires 2a and 2b has been worn to a point where the longest and shallowest grooves have been completely worn away. On the other hand the groups of shallow grooves l0a and l0b on the inside ribs of the tires 2a and 2b have still retained all five grooves, indicating less tread wear on these inside ribs. The condition of the tread wear on the tires 2a and 2b thus indicates the front end alignment of the vehicle 22 should be checked for excessive toe-in.

In Figure 6, the tires 2c and 2d have groups of shallow grooves l0a and l0b that have been reduced to just three grooves, while the groups 8a and 8b have all five grooves remaining. This indicates the inside ribs of both tires are wearing faster than the outside ribs, and an excessive toe-out in the alignment of vehicle 24 may be the problem.

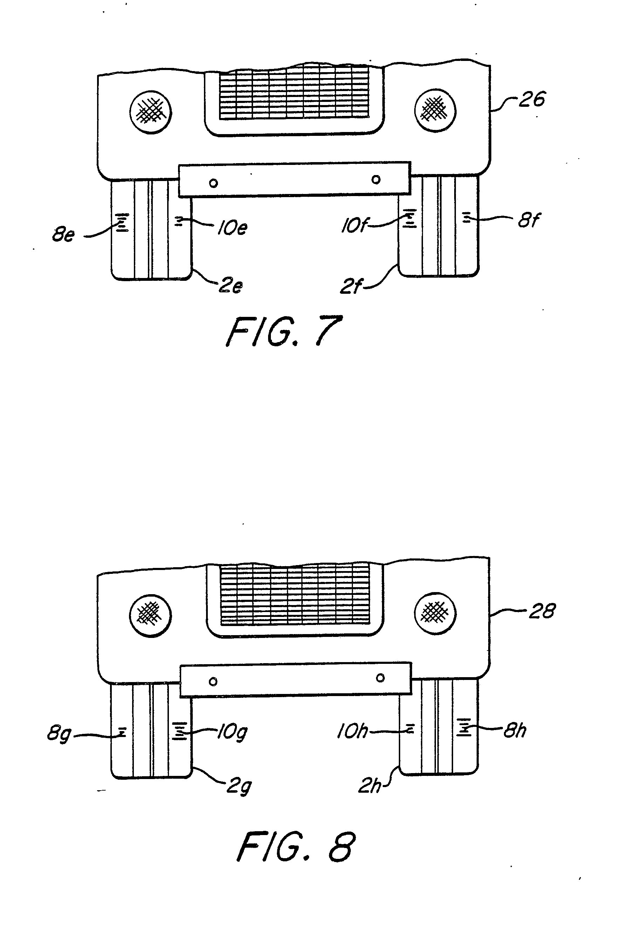

In Figure 7, the groups of grooves l0e on the inside of tire 2e and the group of grooves 8f on the outside of rib of tire 2f have been reduced to three grooves, while the groups of grooves 8e and l0f on their respective tires still have all five grooves. This indicates excessive tread wear on the left sides of both tires (from the driver's viewpoint), possibly caused by the rear axle or axles of the vehicle 26 not being perpendicular to the vehicle frame and pushing it to the left.

In Figure 8, the opposite problem from that illustrated in Figure 7 appears to be the case. Groups of grooves 8g and l0h on the right-hand sides of their respective tires (from the driver's viewpoint) have been reduced to three grooves because of excessive tread wear. Possibly the rear axles of the vehicle 28 are pushing it to the right.

A test of tires incorporating the subject invention included six II R22.5 General Ameri-Steel IV truck tires, hand carved with groups of shallow wear-indicating grooves. These tires have three wide circumferential grooves dividing the tire into four ribs, namely two shoulder ribs and two center ribs. The center ribs are further divided equally by two very narrow circumferential grooves.

Four groups of grooves were spaced at 90° intervals on each shoulder rib with the ends widest grooves spaced 0.3 inches (7.6 mm) from the ends of shoulder grooves. The groups of grooves on each shoulder rib were laterally opposite from one another at the same circumferential location on the tire. Two groups of grooves on each shoulder rib, diametrically opposed from one another on the tire circumference, had a five-groove pattern of the configuration shown in figure 3. Each groove had a width "G" of .030 inches (0.8 mm). The first and last grooves l6 had a depth A (Figure 4) of 2.5/32 inch (2.0 mm) which was the result of a hand-carving mistake; the intention had been to make them 1/32 inch (0.8 mm) deep. The intermediate grooves l8 had a depth B (Figure 4) of 3/32 inch (2.4 mm) and the central groove 20 had a depth C (Figure 4) of 5/32 inch (4.0 mm). The grooves l6, l8 and 20 had widths of 0.35 inches (8.9 mm), 0.25 inches (6.4 mm) and 0.l5 inches (3.8 mm) respectively. The other two groups of grooves on each shoulder rib, spaced 90° from the first two groups of grooves on the shoulder ribs, had a seven-groove pattern, similar to the five-groove pattern shown in Figure 3, but with an additional groove on each end of the group that was 0.45 inches wide (II.4 mm). The middle five grooves of these groups had the same widths and lengths as the grooves of the five-groove groups were 2.5/32 inch (2.0 mm) for the next inwardly adjacent grooves, 5/32 inch (4.0 mm) for the grooves on either side of the center groove, and the center groove was 7/32 inch deep (5.6 mm). Again, the 2.5/32 inch depths of the outermost grooves resulted from a mistake in hand-carving; the intention had been to make them 1/32 inch deep.

Four groups of grooves were also placed in each of the center ribs at circumferential locations 45° offset from each of the groups of grooves in the shoulder ribs. Each of these groups was located approximately half-way between the narrow groove in the center rib and the middle wide circumferential groove in the center rib and the middle wide circumferential groove in the center of the tread. Like the groups in the shoulder ribs, the groups in each center rib included two diametrically opposed groups having the five-groove pattern dimensioned as described above.

The six tires, each having the described hand-carved groups of wear-indicating grooves, were mounted in pairs of two on the front wheels of three International Harvester twin screw tractors with the following steer settings

| Tractor Number | Toe | Camber Left Wheel | Camber Right Wheel | Caster Left Wheel | Caster Right Wheel |
|---|---|---|---|---|---|
| 725 | in 1/32 inches (0.8mm) | +1/8° | -1/8° | +1/4° | +3/4° |
| 750 | 0 | +1/4° | -3/16° | +5/8° | +1° |
| 763 | in 1/8 inches (3.2mm) | +3/16° | +1/8° | +1/8° | -1/8° |

On all tractors, the front and rear tandem axles were aligned with the vehicle frame so that they had no rear axle departure offset.

The hand-carved groove groups of the tires of tractor 763 were inspected at 3,600 and 6,839 miles. At 3,600 miles the shallowest grooves of each group on the outside shoulder ribs of each tire were worn from a depth of 2.5/32 inch (2.0 mm) to a depth of between 1/32 inch and 1.5/32 inch (0.8 mm to 1.2 mm), with the exception of one of the shallowest, one groove group on the right front tire that had a depth of 2/32 inch (1.6 mm). Thus, if these grooves had originally been only 1/32 inch (0.8 mm) deep as planned, all but one of them in one of the groups on the right front tire would have probably been worn away on the outside shoulder ribs. The other grooves of all these grooves remained very visible. In contrast, the shallowest grooves of the groups on the inside shoulder ribs of each tire were 2/32 inch (1.6 mm) or deeper, with the exception of one groove in each of two of the four groups of grooves on these ribs, which were 1.5/32 inch (1.2 mm) and 1.25/32 inch (1.0 mm) deep respectively. Thus, most of the shallowest grooves of these groups exhibited less than 1/32 inch (0.8 mm) of tread wear and would have remained visible, even if they had originally been only 1/32 inch (0.8 mm) deep. The groups of grooves in the shoulder ribs thus indicated substantially greater tread wear on the outside shoulder ribs of the right and left front tires than on the inside shoulder ribs. This would indicate the possibility of excessive toe-in on the setting of these tires. This of course was, in fact, the case, the toe-in being pre-set at 1/8 inch (3.2 mm), whereas the manufacturer's recommended toe setting of the tires was a toe-in of between 0 and 1/16 inch (1.6 mm).

In the groups of grooves in the center ribs of the two tires, even the shallowest grooves on both ribs were at least 2/32 inch (1.6 mm), with the exception of one groove in one group of one of the tires that was only 1.5/32 inch (1.2 mm). Thus, other than indicating a possible slight out-of-roundness of one of the tires, no conclusions could be drawn from observing the grooves on the center ribs at 3,600 miles.

At 6,839 miles, the front tires of tractor 763 were again inspected, and all of the groove groups on the outside shoulder ribs, with the exception of one group on one of the tires, was missing at least one of its shallowest grooves, and in most cases both of the shallowest grooves were missing. In contrast, all of the grooves remained in all of the groups of the center ribs and the inside shoulder ribs. Thus, excessive outside shoulder wear was definitely apparent in both these tires at 6,839 miles.

At 7,435 miles, the tires of tractor 725 were inspected. The groove groups on both the inside and outside ribs of each of these tires still had all their grooves remaining, but the shallowest grooves of the groups on both sides of the tires were all close to wearing away. This shows the outside ribs of the tires were wearing at about the same rate as the inside ribs. Indeed, this would be expected, because the toe-in, camber and caster were all set on this vehicle within the manufacturer's prescribed limits.

At 13,516 miles, the tires of vehicle 750 were inspected. The five-groove groups on both shoulder ribs of the left front tire had only their center grooves remaining, while only the middle three grooves remained of the seven-groove groups. On the right front tire, the middle three grooves of the five-groove groups on each shoulder rib remained visible, while the middle five grooves of the seven groove groups of each shoulder remained visible. This indicates both tires were wearing evenly on their shoulders, but that the left front tire was wearing more than the right front tire. The even shoulder wear was not surprising, because the zero toe-in setting was within the manufacturer's specified limits. Also, the greater wear on the left front tire compared to the right front tire is common for steering axle tire wear.

The foregoing tests show that the groups of shallow grooves of varying depths can be useful indicators of tread wear on various locations of a tire, particularly when these groups of grooves are placed in the shoulder ribs of the tire.

## Claims

1. A tire with a tread divided by circumferential grooves and having two spaced apart groups of shallow grooves for indicating uneven wear of the tread, each of said groups having at least two grooves of different depths, each of said two grooves of one group having the same depth as the corresponding grooves of the other group, and the deepest of said shallow grooves having a depth less than one-half the depth of the deepest circumferential groove in the tread.

2. The tire according to claim I wherein the two groups of shallow grooves are laterally spaced apart on the tire tread and are at substantially the same circumferential position on the tire.

3. The tire according to claim 1 or 2 wherein the two groups of spaced apart shallow grooves are located adjacent opposite shoulders of the tire.

4. The tire according to any one of claims 1 to 3 wherein the grooves of each of the two groups extend laterally across the tire tread and are spaced circumferentially apart.

5. The tire according to any one of claims 1 to 4 wherein each of the two groups of shallow grooves is located within the outermost third of the tread adjacent the respective shoulder.

6. The tire according to any one of claims 1 to 5 wherein each of the two groups of shallow grooves includes three grooves of three different depths.

7. The tire according to claim 6 wherein the three grooves of each of said groups include a first groove having a depth of between 0.02 inches (0.5 mm) and 0.07 inches (I.8 mm), a second groove having a depth between two and three times the depth of the shallow groove, and a third groove having a depth between one and a half and two and a half times the depth of the second groove.

8. The tire according to claim 6 wherein the three grooves of each of said groups include a first groove having a depth of approximately 0.03 inches (0.8mm), a second groove having a depth of approximately 0.09 inches (2.3 mm) and a third groove having a depth of approximately 0.I6 inches (4.I mm).

9. The tire according to claim 6 or claim 7 wherein the three grooves in each of the two groups have depths of a ratio of I:3:5 with respect to one another.

10. The tire according to any one of claims 6 to 9 wherein there are five parallel grooves in each of the two groups, the first and last of the first grooves being of the same depth, and shallower than the other grooves and of the same length and longer than the other grooves, the grooves adjacent said first and last grooves being of the same intermediate width and depth, and the center groove being the deepest and shortest of the five grooves.

11. The tire according to any one of claims 6 to 10 wherein additional groups of shallow grooves are located on said tire adjacent each shoulder and are circumferentially spaced from the two groups of shallow grooves and from each other at equal intervals around the tire.

FIG. 1

FIG. 2

FIG. 4

FIG. 3

FIG. 5

FIG. 6

FIG. 7

FIG. 8